# EUROPÄISCHE PATENTSCHRIFT

(11) **EP 2 216 206 B1**
(45) Veröffentlichungstag und Bekanntmachung des Hinweises auf die Patenterteilung: **12.03.2014**
(21) Anmeldenummer: 10000854.9
(22) Anmeldetag: 28.01.2010
(51) Int. Cl.: B60R 13/01, B60P 1/00, B60R 5/04

(54) **Betätigungsgriff an einem Ladeboden für ein Fahrzeug**
Actuation handle on a loading floor for a vehicle
Poignée de commande sur un sol de chargement pour un véhicule

(30) Priorität: 04.02.2009 DE 102009007451
(43) Veröffentlichungstag der Anmeldung: 11.08.2010
(73) Patentinhaber: Volkswagen Aktiengesellschaft, 38440 Wolfsburg (DE)
(72) Erfinder: Gaas, Matthias, 38442 Wolfsburg (DE)
(74) Vertreter: Biermann, Jörg

(56) Entgegenhaltungen:
- EP-A1- 1 526 237
- WO-A2-2005/026481
- DE-U1- 20 316 663
- US-A- 1 256 992
- US-A- 2 721 750
- US-A- 2 874 986

## Beschreibung

Die Erfindung betrifft einen Betätigungsgriff an einem Ladeboden für ein Fahrzeug, wobei der Betätigungsgriff insbesondere im Randbereich einer anhebbaren und an ein Bauteil grenzenden Seite des Ladebodens angeordnet ist, beispielsweise im Bereich der Ladekante eines über eine Heckklappe zugänglichen Ladebodens in einer Limousine, einem Kombifahrzeug, einem Van oder einem Pickup.

Unter einem Ladeboden wird im Allgemeinen eine Auflage- bzw. Bodenplatte für den Laderaum eines Fahrzeugs, insbesondere eines PKWs einschliesslich eines als Kombi, Kleintransporter, Van oder Pickup ausgebildeten PKWs, verstanden. Unterhalb des Ladebodens befinden sich üblicherweise ein Reserverad und auch Stauraum für Werkzeuge und anderes Fahrzeug-Zubehör. Der Ladeboden ist zumeist ladekantenseitig anhebbar angeordnet, wobei an diesem zur besseren Handhabung eine Griffmulde oder auch ein Betätigungsgriff, auch in Verbindung mit einer Griffmulde, vorgesehen ist. Zusätzlich kann der Ladeboden ausfahrbar gestaltet sein.

Bei dem in der DE 102 61 293 A1 beschriebenen Ladebodensystem mit einem anhebbaren Ladeboden ist bei einer Ausführungsform auch eine Verriegelungseinrichtung im Bereich des in Fahrzeuglängsrichtung hinteren Randabschnittes des Ladebodens vorgesehen. Vorzugsweise wird als Verriegelungseinrichtung zumindest ein Verschlusselement, beispielsweise ein Rastelement, vorgesehen, das eine sichere Befestigung des hinteren Teils des Ladebodens an der Ladekante des Fahrzeugs ermöglicht, so dass der Ladeboden auch im Fall einer Kollision sicher im Laderaum gehalten wird. Bevorzugt ist an der Oberseite des Ladebodens im Bereich des hinteren Randabschnitts desselben zumindest eine Griffmulde vorgesehen, die eine Einhandbedienung des Ladebodens ermöglicht.

Die DE 102 36 102 A1 hat eine Ladebodenanordnung mit einem an einer Führung verschieb- und ausfahrbaren Ladeboden zum Gegenstand, wobei die Führung um eine quer zur Fahrzeuglängsrichtung fahrzeuginnenseitig angeordnete Schwenkachse schwenkbar und heckklappenseitig anhebbar ist. Diese Führung ist mit Rastmitteln versehen, die den Ladeboden in der Transportposition als auch in der angehobenen Be- und Entladeposition heckklappenseitig durch betätigbare und mit dem seitlichen Fahrzeugaufbau in Eingriff stehende Rastelemente fixieren. Dabei sind die Rastelemente über Kraftübertragungsmittel mit einer Bedienungshandhabe gekoppelt und durch diese außer Eingriff mit dem Fahrzeugaufbau bringbar. Bevorzugt ist der Ladeboden zum Fixieren am Fahrzeugboden mit einem Verriegelungselement versehen, das in der Verriegelungsstellung einen fahrzeugfesten Verriegelungsbügel untergreift und mit einem Handgriff zum Verschwenken des Ladebodens gekoppelt ist, derart, dass beim Anfassen und Hochziehen des Handgriffs zuerst die Verriegelung gelöst wird. Der Handgriff und die Bedienungshandhabe für die Verrastung sind im Bereich einer gemeinsamen, heckseitig am Ladeboden ausgebildeten Griffmulde angeordnet, so dass die Handhabung des Ladebodens einfach ist.

Aus der DE 198 58 308 A1 und der DE 102 41 687 B4 ist ein Ladeboden mit einer ausfahrbaren Ladeplatte bekannt, bei dem der Ladeboden zur Fixierung der Ladeplatte in der Transport- bzw. in der Be- und Entladestellung mit zwei Rasthaken bzw. Verriegelungsbolzen versehen ist, die jeweils mit einem Bowdenzug verbunden sind, der mit einem in die Ladeplatte integrierten schwenkbaren Griff betätigbar ist.

Ferner beschreibt die DE 103 31 204 A1 eine Verriegelungseinrichtung an einem höhenverstellbaren Ladeboden mit einem an diesem angeordneten bewegbaren Riegel und einem fahrzeugfesten Bodenschloss zur Aufnahme des Riegels. Dabei befindet sich die Verriegelungseinrichtung im unteren Bereich einer durch eine Tür verschließbaren Laderaumöffnung und weist als Bodenschloss ein in deren Randbereich angeschraubtes Türschlossteil (Schließbügel) auf.

Aus der US 2721 750 A ist eine Verriegelungseinrichtung für eine Abdeckung, wie eine Tür, eine Inspektionstür, eine Verkleidungsklappe o.ä. mit einem in Öffnungsrichtung federkraftbelasteten, jedoch in Geschlossenstellung lösbar fixierten Betätigungsgriff bekannt, der seinerseits als einarmiger Hebel an einer Rahmenstruktur schwenkgelagert ist und über eine Schubstange mit einem axial verschiebbaren Verriegelungsstift wirkverbunden ist. Die Schubstange ist einenends unmittelbar am besagten Betätigungsgriff und anderenends unmittelbar am Verriegelungsstift angelenkt. Eine hierzu ähnliche Lösung ist aus der US 2 874 986 A bekannt, wobei hier der Betätigungshebel mittels Federkraft in Schließrichtung vorgespannt ist. Dabei sind je ein Federelement am besagten Betätigungshebel als auch am Verriegelungsbolzen vorgesehen. Aus der DE 203 16 663 U1 ist ein Schloss mit lösbarer Verrastung für einen Deckel zum Verschließen einer Öffnung in einer Wand eines Stauraums bekannt, mit einem Schlossgehäuse, das in dem Deckel angeordnet ist, und mit einem Griff, der in dem Schlossgehäuse drehbar gelagert ist und manuell zwischen einer eingeklappten Stellung und einer ausgeklappten Stellung schwenkbar ist, um den Deckel aus der Öffnung abheben und in die Öffnung einsetzen zu können. Ferner ist eine Verriegelungszunge vorgesehen, die im Schlossgehäuse verschiebbar gelagert ist und durch Schwenken des Griffes aus einer den Deckel mit der Wand verriegelnden ausgefahrenen Verriegelungsstellung entgegen der Wirkung einer Rückstellfeder in eine den Deckel freigebende eingefahrene Entriegelungsstellung bewegbar ist. Der Griff ist als zweiarmiger Hebel ausgebildet, dessen eines freies Ende als Handhabe dient und dessen anderes Ende in unmittelbarer Wirkverbindung mit der Verriegelungszunge steht. Eine hierzu ähnliche Lösung ist ferner aus der EP 1 526 237 A1 bekannt. Aus der WO 2005026481 A2 ist ein sogenanntes Ladeflächenschloss mit einem schwenkbaren sowie federbelasteten Handgriff nach Art eines zweiarmigen Hebels und mit einer Sperrklinke bekannt, die ihrerseits bei Betätigung des Handgriffes gleichsinnig mit demselben dreht und so in eine Offen- oder Geschlossenstellung überführt wird. Schließlich ist aus der US 1 256 992 A eine Verriegelungseinrichtung mit einem um einen festen Gelenkpunkt schwenkbaren Handgriff bekannt, welcher über eine Koppel und einen in Schwenkrichtung des Handgriffes schwenkbaren zweiarmigen Hebel mit festem Gelenkpunkt mit einem axial verschiebbaren Verriegelungsbolzen wirkverbunden ist.

Der Erfindung liegt die Aufgabe zu Grunde, einen zum Stand der Technik alternativen Betätigungsgriff an einem Ladeboden für ein Fahrzeug zu schaffen, der überdies in einer Basisausführung ohne Verriegelungseinrichtung verwendbar ist jedoch demgegenüber auch auf einfache Weise mit einer Verriegelungseinrichtung bestückbar ist.

Diese Aufgabe wird bei einem Betätigungsgriff nach dem Oberbegriff des Anspruchs 1 durch dessen kennzeichnende Merkmale gelöst. Vorteilhafte Ausgestaltungen sind in den Unteransprüchen aufgeführt.

Ausgehend von einem Betätigungsgriff an einem Ladeboden für ein Fahrzeug, mit einer Griffmulde mit einem eine Grifföffnung umschließenden Griffrahmen und einem an diesem scharnierartig angelenkten Klappgriff, der zwischen einer Nichtgebrauchsstellung mit Anlage am Griffrahmen und einer Gebrauchsstellung, in der dieser vom Griffrahmen hochgestellt ist, schwenkbar ist, wobei der Klappgriff auf den Griffrahmen zu federkraftbeaufschlagt vorgespannt ist und im Bereich der Schwenkachse (A) auf der dem Klappgriff abgewandten Seite des Griffrahmens mit wenigstens einem senkrecht zu dieser Schwenkachse (A) bewegbaren Schubglied in Wirkverbindung steht, das ein Widerlager für eine die Federkraft erzeugende und andernends am Griffrahmen abgestützte Feder aufweist, wobei am Schubglied und am Griffrahmen wenigstens ein Lagerelement und am Griffrahmen eine Führung (F) zur wahlweisen Anordnung einer Verriegelungseinrichtung mit einem Verriegelungselement angeformt sind, und wobei letzteres bei angeordneter Verriegelungseinrichtung mit einer im Bauteil ausgebildeten Aufnahme korrespondiert und in der Nichtgebrauchsstellung des Klappgriffes in die Aufnahme eingreift und bei in die Gebrauchsstellung verbrachtem Klappgriff -3-aus dieser Aufnahme herausgezogen ist, wird die gestellte Aufgabe dadurch gelöst, dass das Schubglied am Griffrahmen angeordnet und axial geführt ist und die Verriegelungseinrichtung einen zweiarmigen Hebel aufweist, der in paralleler Ebene zum Griffrahmen am Lagerelement des Griffrahmens schwenkbar angeordnet und derart einerends mit dem Lagerelement des Schubglledes und andernends mit dem Verriegelungselement gelenkig verbunden ist, dass das Verriegelungselement bei einer Betätigung des Schubgliedes eine zu diesem entgegengesetzte Bewegung ausführt.

Damit ist ein Betätigungsgriff gestaltet, der entweder als reiner Klappgriff ohne Verriegelungseinrichtung ausgeführt ist oder der auf einfache Weise mit einer Verriegelungseinrichtung ausgerüstet werden kann. Beiden Ausführungen liegt die beschriebene Rahmenausführung zu Grunde. Der Vorteil liegt in der Reduzierung der Variantenvielfalt, auch bezüglich des Ladebodens, an dem der Betätigungsgriff angeordnet wird.

Die jeweilige Feder ist bevorzugt in jeweils einer am Griffrahmen ausgebildeten Federkammer untergebracht, die auf der der Schwenkachse für den Klappgriff abgewandten Seite ein Stützlager für die Feder bildet. Das schwenkachsenseitige, schubgliedfeste und daher mit dem Schubglied verschiebbare Widerlager für die Feder befindet sich ebenfalls in der Federkammer. Der Klappgriff ist mit einem Anschlag für das jeweilige Schubglied versehen, an dem dieses in jeder Klappstellung durch die Feder vorgespannt anliegt. Dadurch wird das jeweilige Schubglied bei einer Betätigung des Klappgriffes stets betätigt.

Zur Ausbildung des Schwenklagers zwischen dem Klappgriff und dem Griffrahmen weist der Klappgriff gegenüberliegend zwei Gelenkzapfen auf, und der Griffrahmen diesen zugeordnete hohlzylindrische Lagerpfannen mit jeweils einer Montageausnehmung für die Gelenkzapfen. Durch diese einfache Lagergestaltung ist die Montage des Betätigungsgriffes erleichtert durchführbar.

Bevorzugt ist der Klappgriff symmetrisch mit zwei beidseits des Verriegelungselementes angeordneten Schubgliedern und Federn versehen, um die Betätigungskraft gleichmäßig auf das Verriegelungselement zu verteilen.

Der Rahmen mit der Federanordnung und gegebenenfalls mit der Verriegelungseinrichtung ist in bevorzugter Ausführung auf der dem Klappgriff abgewandten Seite durch eine Abdeckung verschlossen.

Die Erfindung wird nachstehend anhand zweier Ausführungsbeispiele erläutert. In den zugehörigen Zeichnungen zeigen:
- Fig. 1:: eine Draufsicht auf einen Ladebodenausschnitt mit einem Betätigungsgriff mit einer integrierten Verriegelungseinrichtung,
- Fig. 2:: den Betätigungsgriff in perspektivischer Darstellung,
- Fig. 3:: eine perspektivische Unteransicht vom unterseitig geöffneten Betätigungsgriff ohne Verriegelungseinrichtung,
- Fig. 4:: die perspektivische Unteransicht des geöffneten Betätigungsgriffes mit einer Verriegelungseinrichtung und
- Fig. 5 a - d:: ein zwischen dem Klappgriff des Betätigungsgriffes und dem Griffrahmen ausgebildetes Gelenk.

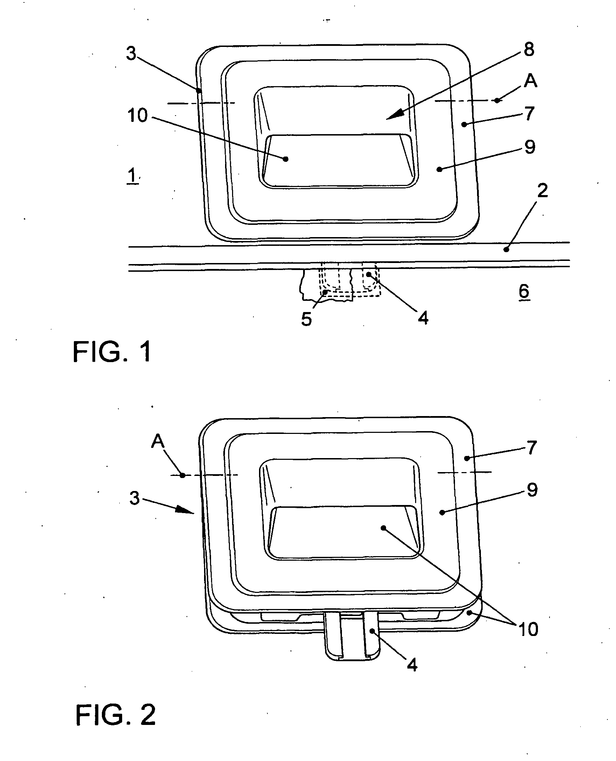

Fig. 1 zeigt einen Ausschnitt aus dem heckseitigen Randbereich eines anhebbaren Ladebodens 1 mit einer Ladebodenschlussleiste 2 in einem Kombi-Fahrzeug und einem an diese (2) ladebodenseitig grenzenden Betätigungsgriff 3, der in den Ladeboden 1 eingelassen ist und dabei im Wesentlichen bündig zu dessen Ober- und Unterfläche abschließt. In diesem (3) ist eine Verriegelungseinrichtung mit einer Verriegelungszunge 4 integriert, die aus der Ladebodenschlussleiste 2 vorsteht und mit einer nicht weiter dargestellten Aufnahme 5 in einer mit einer Ladekante versehenen Bordwand 6 in Eingriff steht. Der Betätigungsgriff weist einen Griffrahmen 7 und einen an diesem auf der der Ladebodenschlussleiste 2 abgewandten Seite scharnierartig angelenkten (Schwenkachse A) und eine Griffmulde 8 umschließenden Klappgriff 9 auf. Dieser liegt in der dargestellten Nichtgebrauchsstellung am Griffrahmen 7 an. Die Griffmulde 8 ist auf der Unterseite des Betätigungsgriffes 3 durch einen Griffboden 10 geschlossen.

Fig. 2 zeigt den Betätigungsgriff 3 als separates Bauteil mit dem Griffboden 10, die im Wesentlichen bündig mit der Unterfläche des Ladebodens 1 abschließt.

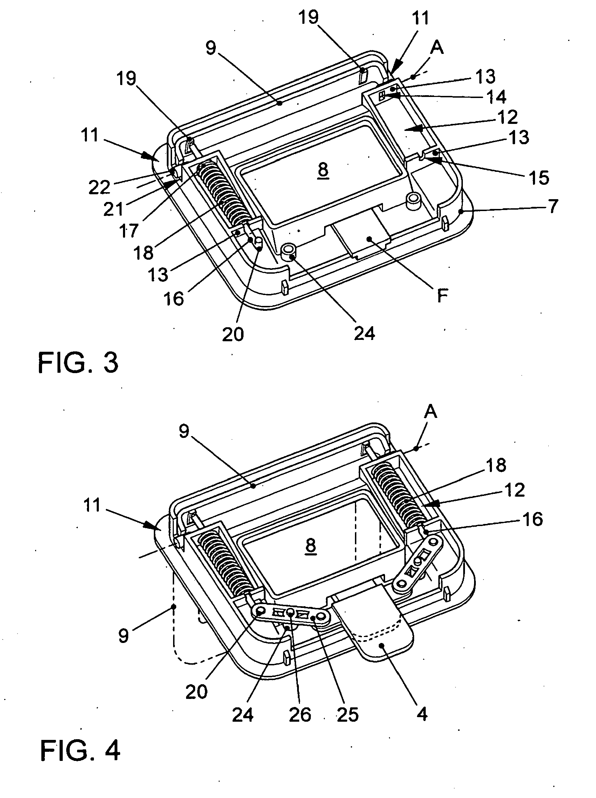

In Fig. 3 ist geöffnete Griffrahmen 7 mit zwei voneinander beabstandeten Gelenken 11, die zwischen diesem und dem Klappgriff 9 ausgebildet sind, dargestellt. In der Darstellung ist der Klappgriff 9 nur gelenkseitig zu sehen und im Übrigen durch den Griffrahmen 7 verdeckt. Vermittels der Gelenke 11 ist der Klappgriff 9 zwischen der dargestellten Nichtgebrauchsstellung (Anlagestellung am Griffrahmen 7) und einer Gebrauchsstellung schwenkbar. In letzterer ist der Klappgriff 9 hochgeschwenkt (strichpunktiert angedeutet in Fig. 4), und der Ladeboden kann erleichtert angehoben werden. Des Weiteren ist am Griffrahmen 7 eine (Gleit-)Führungsschiene F angeformt.

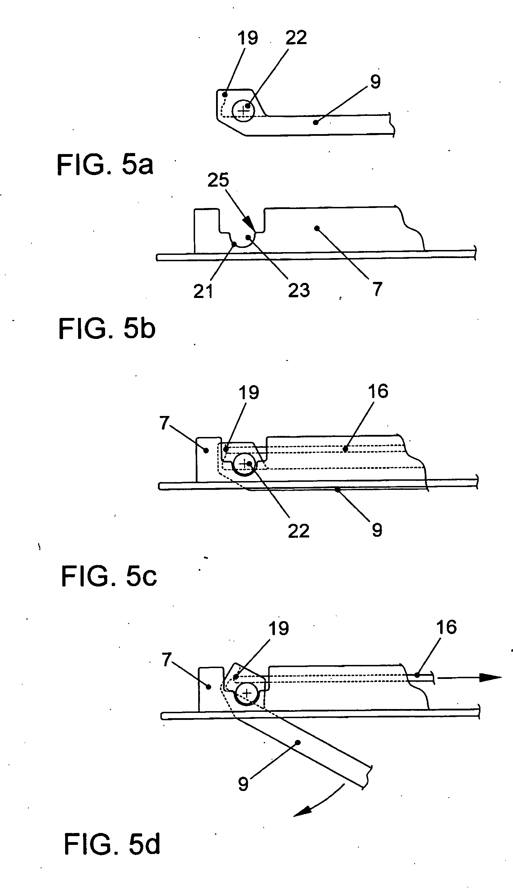

Beidseits der Griffmulde 8 ist am Griffrahmen 7 jeweils eine Federkammer 12 angeformt, in deren Stirnwänden 13 jeweils eine Ausnehmung 14 und 15 ausgebildet ist. In der einen Federkammer 12 befindet sich, in axialer Richtung beweglich, eine senkrecht zur Gelenkachse A ausgerichtete Schubstange 16 mit einem stabfesten Widerlager 17. An diesem (17) und an der diesem abgewandten Stirnwand 13 ist eine Druckfeder 18 vorgespannt abgestützt. Die Schubstange 16 liegt, durch die Druckfeder 18 in Richtung des gelenkseitigen Bereiches des Klappgriffes 9 kraftbeaufschlagt, an einem an diesem (9) ausgebildeten Anschlag 19 an, wodurch der Klappgriff in seiner Nichtgebrauchsstellung mit Anlage am Griffrahmen 7 gehalten wird. An der Schubstange 16 ist andernends ein Lagerzapfen 20 angeformt. Das jeweilige Gelenk 11 wird durch eine am Griffrahmen 7 ausgebildete Lagerpfanne 21 (insbesondere Fig. 5) und einen am Klappgriff 9 angeformten Lagerzapfen 22 gebildet, wobei die Lagerpfanne 21 eine Einführöffnung (23, Fig. 5) für den Lagerzapfen 22 aufweist und eine zylindrische Lagerfläche mit einem Winkelbereich von 240° hat. Des Weiteren sind am Griffrahmen 7 zwei hohlzylindrische Lagerstellen 24 angeformt.

Wird nun der Klappgriff 9 aus seiner Nichtgebrauchsstellung (Fig. 1, 2) um die Gelenke 11 hochgeschwenkt, bewegt sich dessen gelenkseitiger Bereich mit den Anschlägen 19 auf die Federkammer 12 zu, so dass die jeweilige Schubstange 16 ebenfalls auf diese (12) zu bewegt und die jeweilige Druckfeder 18 über das Widerlager 17 komprimiert, also weiter gespannt wird. Nach dem Zurückführen des Ladebodens 1 in seine Ausgangsstellung und dem Ablegen des Klappgriffes 9 auf dem Griffrahmen 7 wirkt die Druckfeder 18 als Rückholfeder und stellt eine klapperfreie Anlage des Klappgriffes 9 an diesem (7) sicher.

In den Fig. 5a - d ist das Zusammenwirken zwischen dem Klappgriff 9 (Fig. 5a) und dem Griffrahmen 7 (Fig. 5b) im Bereich eines Gelenkes 11 dargestellt. Fig. 5a lässt den an der Außenseite des Klappgriffes 9 angeordneten Lagerzapfen 22 und den innenseitig angeordneten Anschlag 19 erkennen, und Fig. 5b die Lagerpfanne 21 mit der Einführöffnung 23, die mit Einführschrägen 25 und einer Vorrastung (nicht weiter dargestellt) zur Erleichterung der Montage des Lagerzapfens 22 versehen ist. Fig. 5c zeigt den mit dem Griffrahmen 7 verbundenen Klappgriff 9 mit der in der Federkammer 12 angeordneten und am Anschlag 19 anliegenden, in strichpunktierten Linien dargestellten Schubstange 16 in der Nichtgebrauchsstellung. Fig. 5d zeigt den Klappgriff 9 in einer vom Griffrahmen 7 weggeschwenkten Position. Es ist zu erkennen, dass durch dieses Wegschwenken die Schubstange 16 verschoben wird.

### Ausführungsbeispiel der Erfindung:

Fig. 4 zeigt den Betätigungsgriff 3 mit einer Verriegelungseinrichtung. Dabei ist auch die zweite Federkammer 12 mit einer Schubstange 16 und einer Druckfeder 18 besetzt. Mit den Lagerstellen 24 ist jeweils ein zweiarmiger Hebel 25 mit einem Lagerzapfen 26 in Eingriff gebracht, der einerends mit dem Lagerzapfen 20 der jeweiligen Schubstange 16 und andernends mit der an der Führungsschiene F verschiebbar angeordneten Verriegelungszunge 4 (Fig. 1 und 2), die die Führungsschiene F seitlich hintergreift (angedeutet in Fig. 2), gelenkig verbunden ist. In der Darstellung befindet sich die Verriegelungszunge 4 in ihrer Verriegelungsstellung, in der der Klappgriff 9 am Griffrahmen 7 anliegt. Beim Hochschwenken des Klappgriffes 9 in eine Gebrauchsstellung werden, wie bereits oben beschrieben ist, die Schubstangen 16 in Richtung des jeweiligen Hebels 25 bewegt, wodurch dieser (25) um die jeweilige Lagerstelle 24 verschwenkt wird, mit der Folge, dass die Verriegelungszunge 4 in Richtung auf die Griffmulde 8 zu verschoben und aus ihrer Verriegelungsstellung herausgezogen wird. Die Entriegelungsstellung, bei der nun der Ladeboden 1 angehoben werden kann, ist in gestrichelten Linien dargestellt. Ist der Ladeboden 1 in seine Ausgangsstellung im Fahrzeug zurückverbracht, kann der Klappgriff 9, federkraftbeaufschlagt unterstützt, in seine Nichtgebrauchsstellung zurückgeschwenkt werden, wobei die Verriegelungszunge 4 aus dem Betätigungsgriff 1 austritt und in Eingriff mit der Aufnahme 5 gelangt und schließlich in dieser federkraftbeaufschlagt arretiert ist.

### Bezugszeichenliste

- 1: Ladeboden
- 2: Ladebodenschlussleiste
- 3: Betätigungsgriff
- 4: Verriegelungszunge
- 5: Aufnahme
- 6: Bordwand
- 7: Griffrahmen
- 8: Griffmulde
- 9: Klappgriff
- 10: Griffboden
- 11: Gelenk
- 12: Federkammer
- 13: Stirnwand
- 14: Ausnehmung
- 15: Ausnehmung
- 16: Schubstange
- 17: Widerlager
- 18: Druckfeder
- 19: Anschlag
- 20: Lagerzapfen
- 21: Lagerpfanne
- 22: Lagerzapfen
- 23: Einführöffnung
- 24: Lagerstelle
- 25: Hebel
- 26: Lagerzapfen
- A: Gelenkachse
- F: Führungsschiene

## Patentansprüche

1. Betätigungsgriff (3) an einem Ladeboden (1) für ein Fahrzeug, mit einer Griffmulde (8) mit einem eine Grifföffnung umschließenden Griffrahmen (7) und einem an diesem scharnierartig angelenkten Klappgriff (9), der zwischen einer Nichtgebrauchsstellung mit Anlage am Griffrahmen (7) und einer Gebrauchsstellung, in der dieser vom Griffrahmen (7) hochgestellt ist, schwenkbar ist, wobei der Klappgriff (9) auf den Griffrahmen (7) zu federkraftbeaufschlagt vorgespannt ist und im Bereich der Schwenkachse (A) auf der dem Klappgriff (9) abgewandten Seite des Griffrahmens (7) mit wenigstens einem senkrecht zu dieser Schwenkachse (A) bewegbaren Schubglied (16) in Wirkverbindung steht, das ein Widerlager (17) für eine die Federkraft erzeugende und andernends am Griffrahmen (7) abgestützte Feder (18) aufweist, wobei am Schubglied (16) und am Griffrahmen (7) wenigstens ein Lagerelement (20 und 24) und am Griffrahmen (7) eine Führung (F) zur wahlweisen Anordnung einer Verriegelungseinrichtung mit einem Verriegelungselement (4) angeformt sind, und wobei letzteres bei angeordneter Verriegelungseinrichtung mit einer im Bauteil (6) ausgebildeten Aufnahme (5) korrespondiert und in der Nichtgebrauchsstellung des Klappgriffes (9) in die Aufnahme (5) eingreift und bei in die Gebrauchsstellung verbrachtem Klappgriff (9) aus dieser Aufnahme (5) herausgezogen ist, **dadurch gekennzeichnet, dass** das Schubglied (16) am Griffrahmen (7) angeordnet und axial geführt ist und die Verriegelungseinrichtung einen zweiarmigen Hebel (25) aufweist, der in paralleler.Ebene zum Griffrahmen (7) am Lagerelement (24) des Griffrahmens (7) schwenkbar angeordnet und derart einerends mit dem Lagerelement (20) des Schubgliedes (16) und andernends mit dem Verriegelungselement (4) gelenkig verbunden ist, dass das Verriegelungselement (4) bei einer Betätigung des Schubgliedes (16) eine zu diesem entgegengesetzte Bewegung ausführt.

2. Betätigungsgriff nach Anspruch 1, **dadurch gekennzeichnet, dass** das Schublied (16) in stirnwandseitigen Ausnehmungen (14, 15) einer am Griffrahmen (7) ausgebildeten Federkammer (12) axial geführt ist.

3. Betätigungsgriff nach Anspruch 1 oder 2, **dadurch gekennzeichnet, dass** der Klappgriff (9) mit zwei symmetrisch zum Verriegelungselement (4) angeordneten Schubgliedern (16) und zwei jeweils am Griffrahmen (7) abgestützten Federn (18) zusammenwirkt, wobei die Verriegelungseinrichtung beidseits des Verriegelungselementes (4) jeweils einen am Griffrahmen (7) gelagerten zweiarmigen Hebel (25) aufweist, der mit dem Ende des Schubgliedes (16) und mit dem Verriegelungselement (4) gelenkig verbunden ist.

4. Betätigungsgriff nach Anspruch 2 in Verbindung mit Anspruch 3, **dadurch gekennzeichnet, dass** die jeweilige Feder (18) jeweils in der am Griffrahmen (7) ausgebildeten Federkammer (12) angeordnet ist, die auf der der Schwenkachse (A) für den Klappgriff (9) abgewandten Seite als Stützlager (13) für die Feder (18) dient.

5. Betätigungsgriff nach Anspruch 3 oder 4, **dadurch gekennzeichnet, dass** der Griffrahmen (7) mit einem Lager (24) für den jeweiligen Hebel (25) versehen ist.

6. Betätigungsgriff nach einem der vorhergehenden Ansprüche, **dadurch gekennzeichnet, dass** der Griffrahmen (7) mit einer das Verriegelungselement (4) stützenden Gleitführung (F) versehen ist.

7. Betätigungsgriff nach einem der vorhergehenden Ansprüche, **dadurch gekennzeichnet, dass** das Verriegelungselement als Verriegelungszunge (4) ausgebildet ist.

8. Betätigungsgriff nach einem der vorhergehenden Ansprüche, **dadurch gekennzeichnet, dass** der Griffrahmen (7) mit der Federanordnung und der Verriegelungseinrichtung auf der dem Klappgriff (9) abgewandten Seite durch eine Abdeckung (10) verschlossen ist.

9. Betätigungsgriff nach einem der vorhergehenden Ansprüche, **dadurch gekennzeichnet, dass** der Klappgriff (9) zur Ausbildung eines Schwenklagers (A) mit dem Griffrahmen (7) Gelenkzapfen (22) aufweist, die mit an diesem Griffrahmen (7) ausgebildeten Lagerpfannen (21) in Eingriff stehen.

10. Betätigungsgriff nach einem der vorhergehenden Ansprüche, **dadurch gekennzeichnet, dass** der Klappgriff (9) einen Anschlag (19) für das jeweilige Schubglied (16) aufweist, an dem dieses (16), durch die Kraft der jeweiligen Feder (18) beaufschlagt, anliegt und der bei einer Betätigung des Klappgriffes (9) das Schubglied (16) betätigt.

11. Betätigungsgriff nach einem der vorhergehenden Ansprüche, **dadurch gekennzeichnet, dass** dieser (3) in den Ladeboden (1) eingelassen ist.

## Claims

1. Actuation handle (3) on a loading floor (1) for a vehicle, with a handle recess (8) having a handle frame (7) surrounding a handle opening and a hinged handle (9) which is coupled to said handle frame in the manner of a hinge and is pivotable between a non-use position in contact with the handle frame (7) and a use position, in which said hinged handle (9)-is raised from the handle frame (7), wherein the hinged handle (9) is prestressed towards the handle frame (7) under the action of spring force and, in the region of the pivot axis (A) on that side of the handle frame (7) which faces away from the hinged handle (9), is operatively connected to at least one push member (16) which is movable perpendicularly to said pivot axis (A) and has an abutment (17) for a spring (18) which produces the spring force and is supported up the other end on the handle frame (7), wherein at least one bearing element (20 and 24) is integrally formed on the push member (16) and on the handle frame (7), and a guide (F) is integrally formed on the handle frame (7), for the optional arrangement of a locking device with a locking element (4), and wherein, in the event of a locking device being arranged, said locking element corresponds with a receptacle (5) formed in the component (6) and, in the non-use position of the hinged handle (9), engages in the receptacle (5) and, when the hinged handle (9) is brought into the use position, is pulled out of said receptacle (5),
**characterized in that** the push member (16) is arranged and is axially guided on the handle frame (7) and the locking device has a two-armed lever (25) which is arranged pivotably on the bearing element (24) of the handle frame (7) in a parallel plane to the handle frame (7) and is connected in an articulated manner at one end to the bearing element (20) of the push member (16) and at the other end to the locking element (4) in such a manner that, when the push member (16) is actuated, the locking element (4) executes an opposite movement thereto.

2. Actuation handle according to Claim 1, **characterized in that** the push member (16) is guided axially in the end-wall-side recesses (14, 15) of a spring chamber (12) formed on the handle frame (7).

3. Actuation handle according to Claim 1 or 2, **characterized in that** the hinged handle (9) interacts with two push members (16) arranged symmetrically with respect to the locking element (4) and two springs (18) supported in each case on the handle frame (7), wherein, on both sides of the locking element (4), the locking device has in each case one two-armed lever (25) which is mounted on the handle frame (7) and is connected in an articulated manner to the end of the push member (16) and to the locking element (4).

4. Actuation handle according to Claim 2 in conjunction with Claim 3, **characterized in that** the respective spring (18) is arranged in each case in the spring chamber (12) which is formed on the handle frame (7) and, on the side facing away from the pivot axis (A) for the hinged handle (9), serves as a supporting bearing (13) for the spring (18).

5. Actuation handle according to Claim 3 or 4, **characterized in that** the handle frame (7) is provided with a bearing (24) for the respective lever (25).

6. Actuation handle according to one of the preceding claims, **characterized in that** the handle frame (7) is provided with a sliding guide (F) supporting the locking element (4).

7. Actuation handle according to one of the preceding claims, **characterized in that** the locking element is designed as a locking tongue (4).

8. Actuation handle according to one of the preceding claims, **characterized in that** the handle frame (7) with the spring arrangement and the locking device on the side facing away from the hinged handle (9) is closed by a cover (10).

9. Actuation handle according to one of the preceding claims, **characterized in that**, in order to form a pivot bearing (A) with the handle frame (7), the hinged handle (9) has pivots (22) which are in engagement with bearing sockets (21) formed on said handle frame (7).

10. Actuation handle according to one of the preceding claims, **characterized in that** the hinged handle (9) has a stop (19) for the respective push member (16), against which stop said push member (16), under the action of the force of the respective spring (18), bears and which actuates the push member (16) when the hinged handle (9) is actuated.

11. Actuation handle according to one of the preceding claims, **characterized in that** said actuation handle (3) is embedded in the loading floor (1).

## Revendications

1. Poignée d'actionnement (3) sur un sol de chargement (1) pour un véhicule, comprenant un creux de poignée (8) pourvu d'un cadre de poignée (7) entourant une ouverture de poignée et d'une poignée rabattable (9) articulée sur celui-ci à la manière d'une charnière, laquelle poignée rabattable peut être pivotée entre une position de non-utilisation avec appui contre le cadre de poignée (7) et une position d'utilisation dans laquelle elle est relevée par rapport au cadre de poignée (7), la poignée rabattable (9) étant précontrainte de manière sollicitée par une force de ressort en direction du cadre de poignée (7), et étant, dans la région de l'axe de pivotement (A) du côté du cadre de poignée (7) opposé à la poignée rabattable (9), en liaison fonctionnelle avec au moins un organe de poussée (16) pouvant être déplacé perpendiculairement à cet axe de pivotement (A), lequel organe de poussée comprend une butée (17) pour un ressort (18) générant la force de ressort et s'appuyant à l'autre extrémité contre le cadre de poignée (7), au moins un élément de palier (20 et 24) étant formé sur l'organe de poussée (16) et sur le cadre de poignée (7) et un guide (F) pour l'agencement de manière sélective d'un dispositif de verrouillage pourvu d'un élément de verrouillage (4) étant formé sur le cadre de poignée (7), et cet élément de verrouillage, lorsque le dispositif de verrouillage est agencé, correspondant à un logement (5) réalisé dans une partie structurale (6), et venant en prise dans le logement (5), dans la position de non-utilisation de la poignée rabattable (9), et étant sorti hors de ce logement (5) lorsque la poignée rabattable (9) a été amenée à la position d'utilisation, **caractérisée en ce que** l'organe de poussée (16) est agencé et guidé axialement sur le cadre de poignée (7) et le dispositif de verrouillage comprend un levier (25) à deux bras qui est agencé dans un plan parallèle au cadre de poignée (7) de manière à pouvoir pivoter sur l'élément de palier (24) du cadre de poignée (7) et qui est relié de manière articulée à l'élément de palier (20) de l'organe de poussée (16) à une extrémité et à l'élément de verrouillage (4) à l'autre extrémité, de telle sorte que l'élément de verrouillage (4) effectue un déplacement opposé à l'organe de poussée (16) lors d'un actionnement de ce dernier.

2. Poignée d'actionnement selon la revendication 1, **caractérisée en ce que** l'organe de poussée (16) est guidé axialement dans des évidements (14, 15) situés du côté des parois frontales d'une chambre de ressort (12) réalisée sur le cadre de poignée (7).

3. Poignée d'actionnement selon la revendication 1 ou 2, **caractérisée en ce que** la poignée rabattable (9) coopère avec deux organes de poussée (16) agencés de manière symétrique par rapport à l'élément de verrouillage (4) et avec deux ressorts (18) s'appuyant respectivement contre le cadre de poignée (7), le dispositif de verrouillage comprenant, des deux côtés de l'élément de verrouillage (4), un levier (25) à deux bras respectif monté sur le cadre de poignée (7), lequel levier à deux bras est relié de manière articulée à l'extrémité de l'organe de poussée (16) et à l'élément de verrouillage (4).

4. Poignée d'actionnement selon la revendication 2 en association avec la revendication 3, **caractérisée en ce que** le ressort respectif (18) est agencé respectivement dans la chambre de ressort (12) réalisée sur le cadre de poignée (7), laquelle chambre de ressort sert de palier d'appui (13) pour le ressort (18) du côté opposé à l'axe de pivotement (A) pour la poignée rabattable (9).

5. Poignée d'actionnement selon la revendication 3 ou 4, **caractérisée en ce que** le cadre de poignée (7) est pourvu d'un palier (24) pour le levier (25) respectif.

6. Poignée d'actionnement selon l'une quelconque des revendications précédentes, **caractérisée en ce que** le cadre de poignée (7) est pourvu d'un guide de coulissement (F) supportant l'élément de verrouillage (4).

7. Poignée d'actionnement selon l'une quelconque des revendications précédentes, **caractérisée en ce que** l'élément de verrouillage est réalisé sous forme de languette de verrouillage (4).

8. Poignée d'actionnement selon l'une quelconque des revendications précédehtes, **caractérisée en ce que** le cadre de poignée (7) pourvu de l'agencement de ressort et du dispositif de verrouillage est fermé par un couvercle (10) du côté opposé à la poignée rabattable (9).

9. Poignée d'actionnement selon l'une quelconque des revendications précédentes, **caractérisée en ce que** la poignée rabattable (9) comprend des axes d'articulation (22) pour la réalisation d'un palier de pivotement (A) avec le cadre de poignée (7), lesquels axes d'articulation sont en prise avec des cavités de palier (21) réalisées sur ce cadre de poignée (7).

10. Poignée d'actionnement selon l'une quelconque des revendications précédentes, **caractérisée en ce que** la poignée rabattable (9) comprend une butée (19) pour l'organe de poussée (16) respectif, contre laquelle butée s'appuie celui-ci (16), de manière sollicitée par la force du ressort (18) respectif, et laquelle butée actionne l'organe de poussée (16) lors d'un actionnement de la poignée rabattable (9).

11. Poignée d'actionnement selon l'une quelconque des revendications précédentes, **caractérisée en ce que** celle-ci (3) est intégrée dans le sol de chargement (1).
